(19) Europäisches Patentamt
European Patent Office
Office européen des brevets

(11) **EP 3 296 626 A1**

(12) **EUROPEAN PATENT APPLICATION**

(43) Date of publication:
**21.03.2018 Bulletin 2018/12**

(51) Int Cl.:
***F21V 8/00*** (2006.01)

(21) Application number: **16188953.0**

(22) Date of filing: **15.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **The Procter & Gamble Company Cincinnati, OH 45202 (US)**

(72) Inventors:
• **AMANN, Mathias**
  **61476 Kronberg/Taunus (DE)**
• **HERRLEIN, Mathias**
  **65824 Schwalbach am Taunus (DE)**
• **SCHAEFER, Tatjana**
  **65824 Schwalbach am Taunus (DE)**

(74) Representative: **Briatore, Andrea**
**Procter & Gamble Service GmbH**
**IP Department**
**Sulzbacher Straße 40-50**
**65824 Schwalbach am Taunus (DE)**

(54) **LIGHT-TRANSMISSIVE FILAMENT**

(57) A light-transmissive filament is configured to emit light through its side wall. In a first segment, a first proportion of the light received by the segment is emitted through the side wall. In a second segment, a second, smaller proportion of the light received is emitted. A method of producing the light-transmissive filament is also provided.

**FIG. 2**

## Description

FIELD OF THE INVENTION

The present invention relates to light-transmissive filaments similar in some ways to optical fibers. It relates also to a hair ornament comprising a plurality of such filaments.

BACKGROUND OF THE INVENTION

A hair ornament comprising a light source and a plurality of optical fibers is known from US 2005/0068791. The optical fibers receive light from the light source.

In one embodiment, the light travels to the fiber ends and there is reflected back into the fiber. The reflected light travels in both the core and the cladding of the fiber and therefore some of it is scattered sideways out of the fiber.

In another embodiment, the fiber ends are cut at an angle to maximize the brightness of a point of light created at the end of each fiber. In this embodiment, substantially no light is emitted sideways over the length of the fiber.

The optical fibers of US 2005/0068791 can therefore create either a point of light, or a line of light, but cannot create both simultaneously. Furthermore, because the line of light is created by reflecting some of the light into the cladding, at the end of the fiber, the line of light will be brightest nearer to the end of the fiber, closest to where the reflective coating on the end of the fiber injects the light into the cladding.

SUMMARY OF THE INVENTION

The present inventors have recognized that it would be desirable to provide a light-transmissive filament that is versatile enough to create a line of light optionally in addition to a point of light. The inventors have also recognized that it would be desirable to provide a light-transmissive filament which can allow more precise control of the brightness over the length of the filament.

The invention is defined by the claims.

According to an aspect of the invention, there is provided a light-transmissive filament, having:

a proximal end for receiving light from a light source;
a distal end; and
a side wall,
wherein the light-transmissive filament is configured to emit through the side wall at least some of the light received at the proximal end,
the light-transmissive filament comprising a first segment of unit length, located at a first distance from the proximal end, the first segment being configured to emit through the side wall a first proportion of the light arriving at the first segment from the proximal end,
the light-transmissive filament further comprising a second segment of unit length, located at a second distance from the proximal end, the second segment being configured to emit through the side wall a second proportion of the light arriving at the second segment from the proximal end,
wherein first distance is preferably greater than the second distance, and
wherein an optical property of the light-transmissive filament varies over a length of the filament such that the first proportion is greater than the second proportion.

With this filament, the non-uniform optical property, varying over the length of the filament, can allow greater control of the brightness of the filament, allowing different effects to be produced, thereby facilitating a more attractive decorative appearance. In some embodiments, the filament can be used to provide a more uniform light output and therefore brightness. In these embodiments, proportionally less light escapes from the filament closer to the proximal end (where the light is injected). Proportionally more light escapes from the filament closer to the distal end (far from where the light is injected).

When the first segment is further from the light source than the second segment, less light arrives at the first segment from the light source, because some of the light has already escaped from of the filament, but proportionally more of this light is allowed to escape (compared with the second segment). This helps to promote a more uniform emission of light through the side wall, over the length of the filament, helping to make the brightness of filament appear more uniform.

Preferably, the variation of the optical property is such that the brightness of the filament appears substantially uniform over the length of the filament, when light is coupled into the proximal end.

The proportion of light emitted through the side wall in the first segment relative to the amount of light received by that first segment from the light source is greater than the proportion of light emitted through the side wall in the second segment relative to the amount of light received by that second segment from the light source. The second segment is closer to the proximal end than the first segment.

For the avoidance of doubt, the "unit length" of the first segment is the same as the "unit length" of the second segment.

The light-transmissive filament preferably comprises a core and a cladding.

The optical property that varies over the length of the filament may comprise a property of the cladding. It optionally comprises a refractive index of the cladding.

The cladding may have a first degree of damage in the first segment and a second degree of damage in the second segment, the first degree of damage being greater than the second degree of damage.

The cladding may be a partial cladding, wherein, in the first segment, a first area of the core is exposed by the partial cladding; and, in the second segment, a second area of the core is exposed by the partial cladding, wherein the first area is greater than the second area.

The optical property that varies over the length of the filament may comprise a surface-roughness of the filament.

The light-transmissive filament is preferably formed of plastic. A light-transmissive filament based on a plastic optical fiber may be more flexible and less brittle than one based on a glass optical fiber.

The light-transmissive filament preferably comprises a core made of PMMA.

It optionally comprises a cladding made of a fluorinated polymer.

The light-transmissive filament may optionally comprise a layer including at least one of: keratin; and melanin.

The light-transmissive filament preferably has a maximum thickness less than 1 mm, more preferably less than 500 $\mu$m, most preferably less than 200 $\mu$m.

A thickness of the filament optionally increases toward the distal end.

Also provided is a hair ornament comprising:

> a light source; and
> a plurality of light-transmissive filaments as summarized above,
> wherein the proximal end of each filament is arranged to receive light from the light source.

According to another aspect of the invention there is provided a method for producing a light-transmissive filament, the method comprising:

> providing a light-transmissive filament, having:
>
>> a proximal end for receiving light from a light source;
>> a distal end; and
>> a side wall, and
>
> modifying an optical property of the light-transmissive filament to a varying degree over a length of the filament, such that the light-transmissive filament after modification comprises:
>
>> a first segment of unit length, located at a first distance from the proximal end, the first segment being configured to emit through the side wall a first proportion of the light arriving at the first segment from the proximal end,
>> a second segment of unit length, located at a second distance from the proximal end, the second segment being configured to emit through the side wall a second proportion of the light arriving at the second segment from the proximal end,
wherein first distance is preferably greater than the second distance, and
wherein the first proportion is greater than the second proportion.

The light-transmissive filament preferably comprises a core and a cladding and the step of modifying the optical property optionally comprises modifying the cladding.

The step of modifying the cladding may comprise chemically treating the cladding to damage it, such that the cladding has a first degree of damage in the first segment and a second degree of damage in the second segment, the first degree of damage being greater than the second degree of damage.

The step of chemically treating the cladding may comprise placing the light-transmissive filament in a bath of solvent and withdrawing it from the bath, wherein at least one of the placing and the withdrawing is controlled so that the distal end remains in the solvent for longer than the proximal end.

The step of modifying the cladding may comprise laser-ablating a portion of the cladding such that, in the first segment, a first area of the core is exposed and, in the second segment, a second area of the core is exposed, the first area being greater than the second area.

According to still another aspect of the invention there is provided a method of customizing the hair ornament summarized above, comprising at least one or any combination of two or more of:

> mechanically altering the surface of at least one of the plurality of light-transmissive filaments;
> cutting at least one of the plurality of light-transmissive filaments; and
> applying a colorant to the surface of at least one of the plurality of light-transmissive filaments; and
> applying a heat treatment to at least one of the plurality of light-transmissive filaments,
> wherein said customizing is preferably performed after attaching the hair ornament to the head of the wearer.

BRIEF DESCRIPTION OF THE DRAWINGS

The invention will now be described by way of example with reference to the accompanying drawings, in which:

> Fig. 1 is a schematic drawing of a conventional optical fiber;
> Fig. 2 is a schematic drawing of a light-transmissive filament according to an embodiment of the invention;

Fig. 3 is a schematic block diagram of a hair ornament according to an embodiment;

Fig. 4 is a flowchart illustrating a method for producing light-transmissive filaments according to a first embodiment of the invention;

Fig. 5 is a flowchart illustrating an alternative method for producing light-transmissive filaments according to a second embodiment of the invention; and

Fig. 6 is a flowchart illustrating a method of customizing a hair ornament according to an embodiment.

It should be noted that these figures are diagrammatic and not drawn to scale. Relative dimensions and proportions of parts of these figures have been shown exaggerated or reduced in size, for the sake of clarity and convenience in the drawings.

DETAILED DESCRIPTION OF THE INVENTION

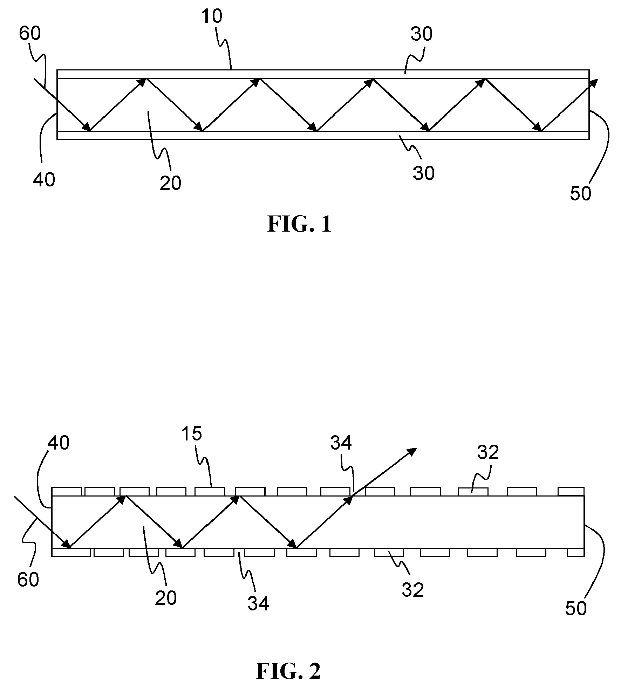

Fig. 1 is a schematic diagram of a conventional optical fiber 10. The optical fiber comprises a core 20 surrounded by a cladding 30. Conventional optical fibers rely on the principle of total internal reflection to transmit light from one end of the fiber to the other. Fig. 1 shows a light ray 60 entering the fiber 10 at the proximal end 40 of the fiber (nearest to the light source) and exiting the fiber at the distal end 50. The difference in refractive index between the core 20 and the cladding 30 ensures that the light is reflected back into the core every time it reaches the core-cladding interface (as long as the ray is initially coupled into the fiber within a predetermined range of angles). In theory, in a perfect optical fiber, all of the light coupled into the fiber 10 at the proximal end 40 would be carried through the fiber to emerge at the distal end 50.

In many applications - in particular, unconventional applications of optical fibers outside of their traditional use in optical communications - it would be desirable to allow some or all of the light to escape through the side wall of the optical fiber. This could allow the creation of a glowing strand or "line of light".

Fig. 2 schematically illustrates a light-transmissive filament 15 according to an embodiment of the present invention. The filament 15 has a proximal end 40 for receiving light from a light source and a distal end 50. A side wall extends between the two ends. In this example, the filament has a circular cross section and therefore the side wall is approximately cylindrical (when the filament is straight). The side wall of the filament is configured to emit at least some of the light that is received through the proximal end 40 of the filament. An optical property of the filament varies over the length of the filament so that it is easier for light to escape from some parts of the filament than others. In greater detail: the light-transmissive filament comprises a first segment located at a first distance from the proximal end. In this first segment, the filament is configured to emit a first proportion of the light arriving from the proximal end 40. The filament further comprises a second segment located at a second distance from the proximal end 40. This second segment is configured to emit a second proportion of the light arriving from the proximal end. The optical property of the filament varies such that the first proportion is greater than the second proportion.

By varying the optical property in this way, the amount of light escaping from the filament at any local segment along its length can be controlled. A wide variety of effects can be created.

One advantageous example is a filament 15 in which the proportion of light escaping increases from the proximal end 40 to the distal end 50. In this case, the first distance is greater than the second distance - that is, the first segment is nearer to the distal end 50 than the second segment is. Preferably, the optical property varies continuously over the length of the filament. This means that any first segment and any second segment (of the same non-trivial length) will have the relationship that the proportion of light that escapes from the first segment is greater than the second segment, provided that the first segment is further from the proximal end 40. This is the example considered in Fig. 2.

Like the optical fiber 10 of Fig. 1, the light-transmissive filament 15 of Fig. 2 comprises a core 20 and a cladding. The core 20 can be substantially similar to the conventional core of Fig. 1. However, in this embodiment, the cladding is a partial cladding 32. In a first segment, closer to the distal end 50, a first area of the core 20 is exposed by the partial cladding 32. In a second segment, closer to the proximal end 40, a second area of the core 20 is exposed. The first area is greater than the second area. This means that the proportion of the surface area of the core that is exposed successively increases from the proximal end 40 to the distal end 50. In this way, by varying a property of the cladding, a greater proportion of light can be allowed to escape at locations closer to the distal end 50.

Without wishing to be bound by theory, it is believed that the filament 15 functions as follows. In the embodiment illustrated in Fig. 2, light is allowed to escape by eliminating the cladding from localized parts of the core 20. The light ray 60 illustrates the effect of this. Where the ray 60 encounters an interface between the core 20 and the partial cladding 32, it is reflected back into the core 20. However, when the light ray 60 encounters an exposed area 34 it is no longer internally reflected and therefore is emitted from the filament. This is believed to be a result of the change in critical angle caused by the removal of the cladding. Other effects may also contribute to the escape of light. For example, the removal of the cladding may also modify the surface of the core in such a way as to promote the escape of light.

Light is coupled into the core 20 at the proximal end 40 of the filament 15. It travels down the filament by internal reflection until it escapes through the side wall of the filament 15. As more light escapes through the side wall, the amount of light remaining within the filament to continue towards the distal end is reduced. Therefore, the amount of light in the filament decays from the proximal end 40 to the distal end 50. If the exposed areas 34 were uniformly distributed over the length of the filament 15, then each ray of light would have an equal chance of escaping through the side wall in any longitudinal segment of a given size. This would result in the filament 15 glowing brighter nearer to the proximal end 40 and glowing less brightly nearer to the distal end 50, because of the decay of light away from the light source, due to the escaping light. To compensate for this, the exposed area per unit length of the filament 15 is increased over the length of the filament, from the proximal end 40 to the distal end 50. Thus, although there is more light being transmitted through the filament nearer to the proximal end 40, this light has a lower chance of escaping through the side wall. There is proportionally less light propagating in the filament nearer to the distal end 50, but this light has a proportionally greater chance of escaping through the side wall, because of the increasing exposed area 34. This can allow a more uniform brightness to be produced over the length of the filament 15.

The light-transmissive filament 15 is preferably similar in its basic construction to a polymer optical fiber 10. According to one embodiment, the core 20 is formed of Poly(methyl methacrylate) (PMMA) and the partial cladding 32 is formed of a fluorinated polymer, such as a fluorocarbon. The filament 15 is preferably fabricated with a maximum overall thickness (maximum overall diameter, for a cylindrical filament) of less than 200 $\mu$m.

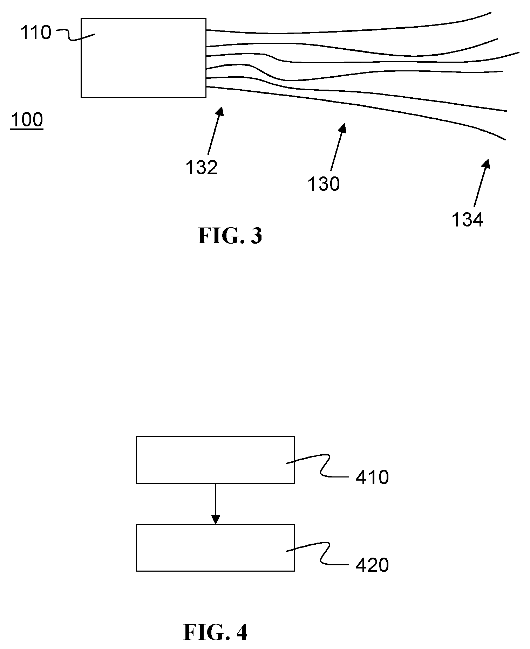

Fig. 3 is a schematic block diagram of a hair ornament incorporating a plurality of filaments 130 like the filament 15 shown in Fig. 2. The hair ornament 100 comprises a light source 110. In this example, the light source 110 includes one or more Light Emitting Diodes (LEDs). The proximal end 132 of each of the filaments 130 is arranged to receive light from this light source 110. Preferably the filaments are held in a bundle and a lens focuses the light from the light source onto the end of the bundle. The filaments may be held in the bundle by gluing them together at their proximal ends, and/or by crimping them together at their proximal ends with a crimp sleeve or collar.

Light is emitted through the side wall over the length of each filament 130. Any light that has not escaped through the side wall is emitted from the distal end 134 of each filament 130. The filaments 130 preferably have lengths in the range 2 cm to 100 cm. They are flexible, allowing them to emulate hair. The hair ornament further comprises a power source (preferably a battery, not shown in Fig. 3) for powering the light source 110. It may also comprise a controller for controlling the light source. Further details of ways to control the light source of a hair ornament can be found in the co-pending European patent application filed on the same date, by the present applicant, entitled "Hair Ornament, Control Device, and Method of Controlling a Hair Ornament".

Fig. 4 is a flow chart of a method according to a first embodiment of the invention for producing light-transmissive filaments 15 like the one illustrated in Fig. 2. Step 410 comprises providing a light-transmissive filament. This may be an optical fiber 10 with a core 20 and a cladding 30. Step 420 of the method comprises modifying the cladding 30 by removing a portion of it. In this embodiment, the step 420 comprises laser-ablating a portion of the cladding so that an area 34 of the core 20 is exposed, as described already above. Following the laser-ablation of step 420, the cladding 30 becomes a partial cladding 32 with exposed areas 34 where the cladding 30 has been removed by the laser, and the optical fiber 10 becomes a light-transmissive filament according to an embodiment of the invention. The laser-ablation is controlled so that a greater proportion of the cladding is removed in a first segment, closer to the distal end 50, compared with a second segment, closer to the proximal end 40. The proportion of light escaping in a given segment of unit length varies in direct relation to the proportion of exposed area 34.

The laser power is preferably selected so that all of the cladding is removed, at the sites where the beam strikes the fiber. In general, it may be difficult to select a laser power that removes all of the cladding while leaving the core completely unscathed. Therefore, in order to ensure that all of the cladding is removed it may be necessary to set the laser power so that a small amount of core material is also removed.

The individual area of cladding removed by each laser strike can be controlled by varying the spot size of the laser. Spot size can be controlled by adjusting the focus of the laser beam. The total area of cladding removed can be controlled by controlling either the size of the individual areas, or the spacing between exposed areas, or a combination of both. Using a smaller spot size and a larger number of individual areas can enable finer control of the amount of cladding removed in any given longitudinal segment of the filament.

In one embodiment, the laser is controlled to create "scratches" spaced at intervals along the length of each filament. Each scratch is formed by one or more scribe lines created by laser ablation. Each scribe line corresponds to one pass of the laser. In one example, the spot size of the laser is 30 $\mu$m in diameter. The number of scribe lines per scratch is increased towards the distal end of the filament. This increases the proportion of exposed area towards the distal end. The scratches may be evenly or unevenly spaced over the length of the filament.

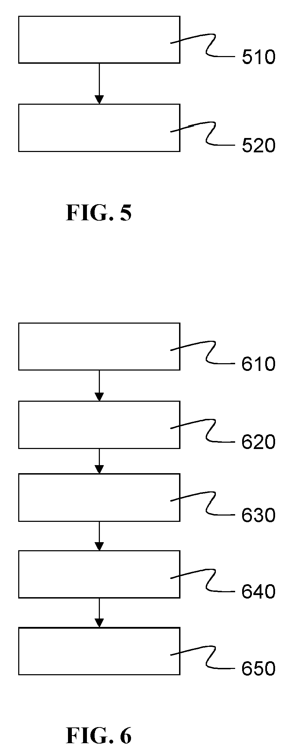

Fig. 5 is a flow chart of an alternative method for producing light-transmissive filaments according to a second embodiment. The first step 510 is substantially similar to the step 410 of Fig. 4. However, in this embodiment, the cladding 30 is modified in a different way. Step 520 comprises chemically treating the cladding to disrupt, damage, or remove it to some extent. The chemical treatment is controlled so that the degree of damage in a first segment, closer to the distal end 50, is greater than a second degree of damage in a second segment closer to the proximal end 40. The proportion of light escaping through the side wall varies in direct relation to the degree of damage. The damage may comprise cracking or partially removing the cladding 30. One way of achieving the desired damage-profile is to immerse an optical fiber 10, like the one shown in Fig. 1, in a bath of a chemical solvent. It is then withdrawn slowly from the solvent with the proximal end 40 being withdrawn first and the distal end 50 being withdrawn last. The degree of damage sustained by the cladding depends on the dwell-time in the solvent. Therefore, nearer to the proximal end 40, the cladding 30 sustains a lesser degree of damage and nearer to the distal end 50, the cladding 30 sustains a greater degree of damage because it spent longer in the solvent.

For fibers with a PMMA core and a fluorocarbon cladding (like Teflon), suitable solvents may include aqua regia (a mixture of nitric acid and hydrochloric acid) or sulfur hydrochloride acid at a suitable temperature. Another suitable solvent may be acetone, which can be atomized over the fibers to damage the cladding. Solvents such as these create cracks in the cladding and may partially destroy or remove it, to produce filaments according to an embodiment of the invention. The cracks allow light to couple out of the core to emerge through the side wall of the filament.

It is possible to produce light-transmissive filaments with desirable properties according to embodiments of the invention by other alternative methods.

For example, the optical property that varies over the length of the filament may comprise a surface-roughness of the filament. This may be appropriate for a filament that comprises a core with no cladding. The proportion of light escaping through the side wall of the filament will vary in direct relation to the roughness of the surface of the filament. Without wishing to be bound by theory, it is believed that increasing the surface roughness has the effect of creating many small facets in the surface of the filament, at different angles. This increases the range of angles for which light propagating inside the filament is able to escape from it. Therefore, by increasing the surface-roughness from the proximal end 40 to the distal end 50 a more uniform brightness of the side wall of the filament may be obtained. Surface roughness can be measured using conventional methods. For example, it is known to measure surface roughness using a roughness tester comprising a thin needle or stylus. The tip of the stylus is mechanically drawn across the surface and the movement of the stylus is measured to determine roughness. This method can be used to measure roughness even at a very fine scale. For example, it is known to use a very thin stylus to measure the roughness of semiconductor or Micro-Electro-Mechanical System (MEMS) devices. The same technique can be used to measure the roughness of a filament according to an embodiment. The surface-roughness may be adjusted by chemical or mechanical treatment of the filament, or by laser ablation using a suitable laser power.

A further alternative for filaments having a core 20 and cladding 30 is to vary the refractive index of the cladding in the longitudinal direction (that is, along the length of the filament). The refractive index of the cladding determines the range of angles of incidence at which light is reflected internally back into the core 20. Therefore, by varying the refractive index of the cladding 30, light reaching the core-cladding interface at varying angles of incidence can be selectively permitted to escape through the side wall. Longitudinal variation of the refractive index of the cladding 30 is possible by doping the cladding such that the dopant concentration varies along the length of the fiber. For example, adding germanium can increase the refractive index, while adding fluorine can reduce it. The refractive index of doped material can be determined by the linear relationship between the doped material's mole percentage and permittivity. Assume that $n_0$ is the refractive index of the host material and $n_1$ is the refractive index of $m_1$ mole-percentage doped material. Then, the refractive index n of m mole-percentage doped material can be interpolated as:

$$n^2 = n_0{}^2 + \frac{m}{m_1}(n_1{}^2 - n_0{}^2)$$

Among the methods discussed above, laser-ablation is currently preferred. It allows precise control of the areas 34 of cladding that are removed to expose the core. Both the size and position of the exposed areas 34 can therefore be controlled accurately. Chemically treating the cladding can be faster and cheaper than laser-ablation, but it can be more difficult to accurately control the degree of damage to the cladding 30 over the length of the filament. The approach of using surface-roughness to control the escape of light may have the disadvantage that surface-roughness can be modified accidentally during use, for example by abrasion of the filament. Modifying the refractive index longitudinally may be costly.

Fig. 6 is a flowchart illustrating a method of customizing a hair ornament, such as that of Fig. 3, according to an embodiment. The method begins with step 610, in which the hair ornament 100 is attached to the hair of a wearer. The attachment may be achieved in any suitable way. Preferably, the hair ornament 100 comprises a fastening for releasably attaching the hair ornament to the hair or head of the wearer. The fastening may comprise a hair-band, grip, clip, pin, comb, jaws or clamp, for example.

After the hair ornament is attached to the hair, at least one of the filaments is mechanically altered, in step 620. The mechanical alteration may comprise abrading, scraping, or scratching the filament to modify its optical properties. For example, by scraping a blade of a scissors along a section of the filament, the cladding may be damaged or removed in that section. This can increase the escape of light from that section of the filament, so that the filament glows brighter there.

Next, in step 630, one or more of the filaments are cut. This can allow the hair ornament to be incorporated into a hair style in a more integrated fashion, for example by cutting the hair ornament to the same length as the wearer's hair.

In step 640, a colorant, such as a pigment, is applied to one or more of the filaments. The colorant may be applied to the filaments at the same time as applying it to the wearer's hair. Again, this can allow the hair ornament to be integrated to a greater extent into the hairstyle. It can also modify the color of the light emitted through the filaments, because the pigment acts as a filter, selectively transmitting predetermined wavelengths of light.

In step 650, a heat treatment is applied to the hair. This may comprise curling the hair using curling tongs. The heat treatment is applied also to the filaments which are embedded in the hair. In this way, the filaments can be curled similarly to the hair. Care is preferably taken to ensure that the temperature is not too hot and/or is not applied for too long, so as to avoid melting the filaments.

The embodiment of Fig. 6 includes all three steps 620, 630, and 640. However, in other embodiments, just one or a combination of two steps may be performed. The method is preferably carried out by a hair dresser, stylist or colorist, in a hair salon, concurrently with cutting, styling, or coloring the wearer's hair.

**Test Method**

The proportion of light escaping from segments of a filament according to an embodiment of the invention can be measured as follows.

The length of each segment measured should be the same. Each segment should also be long enough to average the effects of localized modifications of the filament. For example, if the filament has been prepared by laser-ablating the cladding 30 to provide exposed areas 34, the segments measured should be long enough to include several exposed areas. The length of the segments can be chosen according to the characteristics of the filament, including its total length and the optical property that varies over the length of the filament. The length can also be chosen so that it is appropriate for the application for which the filaments are intended to be used. In general, the precision of the light measurement will increase with increasing length of the segment, because there will be a greater averaging effect and because a greater total amount of light will be available to be detected. With a shorter segment-length, the total amount of light being emitted from each segment will be lower, potentially making it more difficult to measure precisely. However, measuring long segments may make it more difficult to measure variations in the proportion of light emitted that have a high spatial frequency - that is, sudden changes over short segments of filament.

In the following example, each segment tested is a 1 cm long, straight segment. To assess a given filament, the filament is routed through a measurement chamber, which is a box with openings in two opposing sides, each opening being sized to tightly fit the filament, so that no extraneous light can enter the chamber. The filament passes through the chamber so that a 1 cm long segment of the filament is exposed inside the chamber. The filament is drawn through the chamber in order to measure different segments. Preferably, non-overlapping segments are measured, most preferably adjacent non-overlapping segments. Light is coupled into the proximal end of the filament from an LED light source. If the optical characteristics of the filament are strongly dependent on wavelength, then a light source should be chosen that matches the light color (spectral distribution) in use. In general, however, the results are not strongly dependent on wavelength, particularly since the goal is a relative comparison among segments of the same filament. In the event of any ambiguity about the color of light to be chosen, monochromatic light at a wavelength of 650 nm should be used.

Care should be taken to ensure that as little light as possible is reflected back into the filament at the distal end. However, since the aim is to compare different segments, some reflection is acceptable, provided that it is the same for all segments measured, at different positions along the filament.

The light output from the side wall of the segment into the chamber is measured. This can be done using any appropriate method, provided that the same method is applied consistently among the different segments. For example, the brightness of the sidewall can be measured using a camera, light meter, or other similar optical sensor. The sensor integrates light over the length of the segment. In case the light emission through the side wall is anisotropic, the brightness should be measured over a plurality of different angles and integrated. For example, the filament may be rotated about its longitudinal axis relative to the camera, if necessary, while measuring the brightness. The light output is then determined as the sum (or average) of the brightness over at least one full rotation (360°).

The test method described above can be used to assess whether the light output from the filament is uniform over its length. If it is desired to assess the filament more generally, a variant of the method may be used. In this variant, instead of drawing the filament through the measurement chamber, the filament is cut into 1 cm segments. Each segment is separately measured in the measurement chamber. That is, light is coupled into the proximal end of the individual segment and the brightness of the sidewall is measured inside the chamber.

The light output from each segment is correlated with the proportion of light escaping from the segment. Therefore, the light output of different segments can be compared in order to determine which segments emit a greater proportion of the light coupled into their proximal ends.

**Example**

In a first example, filaments were prepared by laser-ablation. The starting optical fiber for this example was a plastic optical fiber marketed by Asahi Kasei E-Materials Corporation under the product designation DB-175. This comprises a PMMA core and a fluorinated polymer cladding.

A carbon dioxide ($CO_2$) laser with wavelength 10 $\mu$m and 30W power was used for laser ablation. The laser is designed to cut plastic and textiles but has an engraving mode at which it emits approximately 25% of the maximum output power. This engraving mode was used to ablate the cladding selectively.

A bundle of about 30 fibers were engraved together. Each fiber had a diameter of 175 $\mu$m $\pm$15 $\mu$m. The fibers were laid out side by side. The fibers were engraved intermittently along their length by pulsing the laser to create separate exposed areas. The fibers were held fixed. The laser was scanned across the bundle, to engrave all of the side-by-side fibers, and scanned longitudinally along the length of the fibers to engrave each fiber intermittently over its length. The exposed areas where the cladding was ablated by the laser were arranged more densely toward the distal end of the fibers and less densely towards the proximal end. The density gradient was approximately linear over the length of each fiber. The size of each exposed area was substantially constant over the length of each fiber, while the spacing between exposed areas reduced (approximately linearly) from the proximal end to the distal end. The laser beam was oriented substantially perpendicular to the longitudinal axis of the fibers. The cladding was removed on the side of the fibers facing the laser source. It was also removed on the side facing away from the laser source, because the core acts like a cylindrical lens, focusing the laser beam.

**Other Embodiments**

As explained above, light transmissive filaments according to embodiments of the invention may be particularly suitable for use in an illuminated hair ornament. Several variations to the embodiments described above may be considered, for this application.

The overall thickness (diameter) of the filaments may vary over the longitudinal dimension. For example, one or more filaments may have a diameter increasing from the proximal end to the distal end. This can emulate real hair, in which the individual strands of hair are thicker at the ends.

Another possibility is that the filament comprises a layer of keratin or a layer of melanin, or both. The keratin or melanin may be the outermost layer of the filament. In one case, the keratin or melanin may act as the cladding of the filament. In another case, the keratin or melanin may be an additional layer coated over the cladding of the filament. Keratin and melanin are constituents of natural hair. Therefore, incorporating a layer of keratin and/or melanin in the filament can give the filament a more natural appearance, like real hair. When the filament is not illuminated, it may be less obtrusive in appearance, because its appearance is similar to the strands of hair on the wearers head. And when the filament is illuminated, it may appear as though the wearer's hair itself is glowing. Melanin is a pigment. Therefore, the amount or concentration of melanin may be used to give the filament a desired color. In particular, it can be used to color the filament to match the color of a wearer's hair.

Filaments according to embodiments of the invention can be used in other applications, in addition to their use in hair ornaments. They can be used in other ornamental applications, for instance, to add a glowing effect to clothing, or other fashion accessories such as jewelry, handbags, watches, footwear, eyewear, or headwear. The filaments can also be used in decorative, functional, or architectural illumination applications, such as domestic indoor or outdoor lighting, automotive lighting, retail (shop) lighting, or portable lighting.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1. A light-transmissive filament, having:

    a proximal end for receiving light from a light source;
    a distal end; and
    a side wall,
    wherein the light-transmissive filament is configured to emit through the side wall at least some of the light received at the proximal end, the light-transmissive filament comprising a first segment of unit length, located at a first distance from the proximal end, the first segment being configured to emit through the side wall a first proportion of the light arriving at the first segment from the proximal end,

the light-transmissive filament further comprising a second segment of unit length, located at a second distance from the proximal end, the second segment being configured to emit through the side wall a second proportion of the light arriving at the second segment from the proximal end,

wherein first distance is preferably greater than the second distance, and

wherein an optical property of the light-transmissive filament varies over a length of the filament such that the first proportion is greater than the second proportion.

2. The light-transmissive filament of claim 1, comprising a core and a cladding.

3. The light-transmissive filament of claim 2, wherein the optical property that varies over the length of the filament comprises a property of the cladding.

4. The light-transmissive filament of claim 3, wherein the optical property that varies over the length of the filament comprises a refractive index of the cladding.

5. The light-transmissive filament of claim 3 or claim 4, wherein the cladding has a first degree of damage in the first segment and a second degree of damage in the second segment, the first degree of damage being greater than the second degree of damage.

6. The light-transmissive filament of any one of claims 3 to 5, wherein the cladding is a partial cladding, wherein, in the first segment, a first area of the core is exposed by the partial cladding; and, in the second segment, a second area of the core is exposed by the partial cladding,
wherein the first area is greater than the second area.

7. The light-transmissive filament of any one of the preceding claims, wherein the optical property that varies over the length of the filament comprises a surface-roughness of the filament.

8. The light-transmissive filament of any one of the preceding claims, wherein the light-transmissive filament is formed of plastic.

9. The light-transmissive filament of claim 8, comprising a core made of PMMA.

10. The light-transmissive filament of claim 8 or claim 9, comprising a cladding made of a fluorinated polymer.

11. The light-transmissive filament of any one of the preceding claims, comprising a layer including at least one of: keratin; and melanin.

12. The light-transmissive filament of any one of the preceding claims, having a maximum thickness less than 1 mm, more preferably less than 500 $\mu$m, most preferably less than 200 $\mu$m

13. The light-transmissive filament of any one of the preceding claims, wherein a thickness of the filament increases toward the distal end.

14. A hair ornament comprising:

a light source; and
a plurality of light-transmissive filaments according to any one of the preceding claims,
wherein the proximal end of each filament is arranged to receive light from the light source.

15. A method for producing a light-transmissive filament, the method comprising:

providing a light-transmissive filament, having:

a proximal end for receiving light from a light source;
a distal end; and
a side wall, and

modifying an optical property of the light-transmissive filament to a varying degree over a length of the filament, such that the light-transmissive filament after modification comprises:

a first segment of unit length, located at a first distance from the proximal end, the first segment being configured to emit through the side wall a first proportion of the light arriving at the first segment from the proximal end,
a second segment of unit length, located at a second distance from the proximal end, the second segment being configured to emit through the side wall a second proportion of the light arriving at the second segment from the proximal end,
wherein first distance is preferably greater than the second distance, and
wherein the first proportion is greater than the second proportion.

16. The method of claim 15, wherein the light-transmissive filament comprises a core and a cladding and the step of modifying the optical property comprises modifying the cladding.

**17.** The method of claim 16, wherein the step of modifying the cladding comprises chemically treating the cladding to damage it, such that the cladding has a first degree of damage in the first segment and a second degree of damage in the second segment, the first degree of damage being greater than the second degree of damage.

**18.** The method of claim 17, wherein the step of chemically treating the cladding comprises placing the light-transmissive filament in a bath of solvent and withdrawing it from the bath, wherein at least one of the placing and the withdrawing is controlled so that the distal end remains in the solvent for longer than the proximal end.

**19.** The method of claim 16, wherein the step of modifying the cladding comprises laser-ablating a portion of the cladding such that, in the first segment, a first area of the core is exposed and, in the second segment, a second area of the core is exposed, the first area being greater than the second area.

**20.** A method of customizing the hair ornament of claim 14, comprising at least one or any combination of two or more of:

> mechanically altering the surface of at least one of the plurality of light-transmissive filaments;
> cutting at least one of the plurality of light-transmissive filaments;
> applying a colorant to the surface of at least one of the plurality of light-transmissive filaments; and
> applying a heat treatment to at least one of the plurality of light-transmissive filaments,
> wherein said customizing is preferably performed after attaching the hair ornament to the head of the wearer.

60    10    30

40    20    30    50

**FIG. 1**

40    15    34    32

60    20    34    32    50

**FIG. 2**

110 ~

100

132

130

134

**FIG. 3**

410

420

**FIG. 4**

**FIG. 5**

**FIG. 6**

Europäisches
Patentamt

European
Patent Office

Office européen
des brevets

# EUROPEAN SEARCH REPORT

Application Number

EP 16 18 8953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ziqian Bai: "INNOVATIVE PHOTONIC TEXTILES: THE DESIGN, INVESTIGATION AND DEVELOPMENT OF POLYMERIC PHOTONIC FIBER INTEGRATED TEXTILES FOR INTERIOR FURNISHING", , 1 January 2015 (2015-01-01), XP055339582, Retrieved from the Internet: URL:http://ira.lib.polyu.edu.hk/bitstream/10397/35099/2/b28068749_ir.pdf [retrieved on 2017-01-26] | 1-13, 15-19 | INV. F21V8/00 |
| Y | * pages 1-25 - pages 45-46 * * pages 68-140 * ----- | 14,20 | |
| A | US 6 004 315 A (DUMONT MICHAEL G [US]) 21 December 1999 (1999-12-21) * column 2, lines 45-50; figure 1 * * column 4, line 20 - column 5, line 43 * ----- | 12 | |
| A | US 6 496 620 B1 (CHEN CHINGFA [US] ET AL) 17 December 2002 (2002-12-17) * column 9, line 20 - line 31; figure 9 * ----- | 13 | TECHNICAL FIELDS SEARCHED (IPC) |
| Y,D | US 2005/068791 A1 (BONANG CHRISTOPHER C [US] ET AL) 31 March 2005 (2005-03-31) * paragraphs [0003] - [0007], [0012] - [0021], [0045] - [0061], [0067]; claims 1,2,4-6,10,13,15-19,21,23-26; figures 1-10 * ----- | 14,20 | G02B A44C A45D |

-/--

The present search report has been drawn up for all claims

| Place of search | Date of completion of the search | Examiner |
|---|---|---|
| The Hague | 30 January 2017 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 18 8953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MERCHANT D F ET AL: "Chemical tapering of polymer optical fibre", SENSORS AND ACTUATORS A: PHYSICAL, ELSEVIER BV, NL, vol. 76, no. 1-3, 30 August 1999 (1999-08-30), pages 365-371, XP004184463, ISSN: 0924-4247, DOI: 10.1016/S0924-4247(99)00008-4 * the whole document * | 18 | |

TECHNICAL FIELDS SEARCHED (IPC)

The present search report has been drawn up for all claims

| Place of search | Date of completion of the search | Examiner |
|---|---|---|
| The Hague | 30 January 2017 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

EP 3 296 626 A1

## ANNEX TO THE EUROPEAN SEARCH REPORT
## ON EUROPEAN PATENT APPLICATION NO.

EP 16 18 8953

30-01-2017

| Patent document cited in search report | | Publication date | Patent family member(s) | | Publication date |
|---|---|---|---|---|---|
| US 6004315 | A | 21-12-1999 | AU | 729233 B2 | 25-01-2001 |
| | | | CA | 2265565 A1 | 19-03-1998 |
| | | | EP | 0925521 A1 | 30-06-1999 |
| | | | JP | 2001502438 A | 20-02-2001 |
| | | | US | 6004315 A | 21-12-1999 |
| | | | WO | 9811462 A1 | 19-03-1998 |
| US 6496620 | B1 | 17-12-2002 | AU | 3724700 A | 02-11-2000 |
| | | | BR | 0009900 A | 13-02-2002 |
| | | | CA | 2370650 A1 | 26-10-2000 |
| | | | CN | 1347513 A | 01-05-2002 |
| | | | EP | 1200863 A2 | 02-05-2002 |
| | | | JP | 2002542507 A | 10-12-2002 |
| | | | MX | PA01010636 A | 14-03-2002 |
| | | | TW | 460719 B | 21-10-2001 |
| | | | US | 6496620 B1 | 17-12-2002 |
| | | | WO | 0063731 A2 | 26-10-2000 |
| US 2005068791 | A1 | 31-03-2005 | US | 2005068791 A1 | 31-03-2005 |
| | | | WO | 2005031399 A2 | 07-04-2005 |

EPO FORM P0459

**REFERENCES CITED IN THE DESCRIPTION**

**Patent documents cited in the description**

- US 20050068791 A